# EUROPEAN PATENT APPLICATION

(11) **EP 3 343 962 A1**
(43) Date of publication of application: **04.07.2018**
(21) Application number: 16207634.3
(22) Date of filing: 30.12.2016
(51) Int. Cl.: H04W 8/00, H04W 76/02, H04W 88/04

(54) **TETHERING VIA A CELLULAR NETWORK DEVICE**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A method and device for automatic mobile device tethering. Devices contain tether controllers which control whether to configure the device as a tether provider or a tether client. A mode selector determines when to switch modes based on a combination of the cellular device connectivity status, a user manual setting, other aspects of the current device status and a set of pre-stored rules and thresholds defining the conditions for tethering. When configured as a tether client, a request for available pre-registered tether providers includes an indication of the expected data usage. When configured as a tether provider, a response to a received tether request contains an indication of the provided tether quality available to the tether requestor.

## Description

### Field of Invention

The present invention relates to cellular communications and in particular to a method for changing a cellular device's data connection to travel via another neighbouring cellular device in the event of connectivity loss from the cellular device's data connection.

### Background

### Cellular networks

In a cellular network such as a Long term Evolution (LTE) network, user entities such as mobile phones can connect and exchange data with external networks such as resources on the Internet and other wide area networks such as Internet Protocol Exchange (IPX) and corporate networks. An LTE network is formed of a radio access network (RAN) of base stations known as eNodeBs and a network core known as an Evolved Packet Core (EPC). Older cellular network technologies use a similar overall architecture.

Each eNodeB is a high powered transceiver with a range of tens of kilometres, and user entities (UEs) such as mobile phones having similar transceivers can connect to the eNodeB using the same LTE protocols. The set of eNodeBs forming a RAN are provisioned by the Mobile Network Operator (MNO) at geographic locations to form a grid of minimally overlapping cells so that the RAN can provide the largest geographic coverage with the smallest number of eNodeBs.

When a mobile device which is a subscriber of the MNO is within range of an eNodeB, a connection is formed and data can be transferred between the mobile device and the network core.

The network core contains the control functions for the operation of the network. Subscriber and billing information is used to determine whether the mobile device is authorised to use the network. The network core also contains routing functions and gateways for connecting user data with the resources which are external to the cellular network such as the Internet.

While the mobile device is authorised and within range of the RAN, it will have connectivity to external resources. Furthermore since the mobile device can change geographical locations, at boundaries between eNodeBs, handover processes prevent the mobile devices from losing connectivity.

### Tethering

While the cellular network architecture and processes provide for wide area connectivity, if the mobile device cannot communicate with an eNodeB then it cannot access the cellular network. This may occur where the user is abroad (roaming) and therefore outside the range of the cellular network, or when the mobile device is in the coverage area of the RAN, but local interference creates a coverage gap which prevents communication between the mobile device and an eNodeB. Examples are being underground, in a building or surrounded by tall structures or mountains which attenuate the cellular signal.

Tethering is a process whereby a mobile device can connect to, and use another nearby device's cellular data link where its own connection to the cellular network is not available via a short range local device communication path. Additionally, tethering can be used for other classes of user entity such as tablets and laptop computers which do not have cellular network interfaces but can tether using WiFi™, USB or Bluetooth™.

Where the tether providing device is another mobile device, often it will be subscribed and connected to a different cellular network since two devices belonging to the same cellular network in the same location will have similar network reception, whereas differences in RAN deployment between MNOs will generally result in different cellular networks having different network quality over the same geographical area.

For larger tether providing devices such as computers, tethering will allow a broadband connection to be provided for carrying the tether requester's traffic to external resources.

Several tethering methods are known and they can be generally divided into wired tethering and wireless tethering.

Wired tethers are generally formed by physically connecting a cable between the tether requester device and a tether providing device. A Universal Serial Bus (USB) cable is often used although other proprietary wired solutions are also known.

Wireless tethering is often more convenient, especially for smaller devices such as mobile phones which may not have the necessary connectors for a wired tether. Two common tether mediums are based on WiFi™ and Bluetooth™.

In all tethering methods, the aim is for a device which has lost connectivity to its own cellular network to be able to communicate with external network resources via another device. Tethering is generally taken to mean the carrying of data packets generated by applications running on the mobile device and not traditional voice and SMS cellular services. Examples of such "mobile data" applications include web browsing, file downloads, mobile device "app" data packets, packet based voice applications (VoIP) and media streaming.

Once the users of each device have agreed to tether, the tether requester device will send all user data traffic to the tether provider via the tether link and the tether provider device routing is reconfigured to direct data packets from the tether requester to its backhaul cellular/broadband connection. Similarly, any incoming packets addressed to the requester mobile device will be forwarded via the local tether interface to the tether requester.

While the technical processes for tethering are fairly well defined, recognising that tethering is required by a device is still a largely manual user process.

The present invention is directed to the above problem.

### Statements of Invention

In one aspect, an embodiment of the present invention provides a method of operating a first cellular network device to access external network resources via at least one second cellular network device configured as a data transfer provider, the first cellular network device having a cellular network interface for communication with a cellular network and at least one local network interface, the at least one second cellular network device having a cellular network interface and at least one local network interface matching the at least one local network interface of the first mobile device, the method comprising: determining an occurrence of service loss between the first cellular network device and the cellular network via the cellular network interface; detecting the presence of the at least one second network device via the at least one local network interface; sending a request to the at least one second cellular network device to route data via the at least one local network interface and cellular network interface of the at least one second cellular network device; receiving a response to the request from the at least one second cellular network device; and connecting to said at least one second cellular network device configured as a data transfer provider via the at least one local network interface.

In another aspect, an embodiment of the present invention provides a method of operating a first cellular network device to provide access to external network resources for at least one second cellular network device configured as a tether requestor, the first cellular network device having a cellular network interface for communication with a cellular network and at least one local network interface, the at least one second cellular network device having a cellular network interface and at least one local network interface matching the at least one local network interface of the first mobile device, the method comprising: receiving a request for tethering from the at least one second device; determining the current status of the first cellular network device; accessing a set of parameters relating to conditions for providing tethering; determining whether tethering can be provided to the tether requestor in dependence upon the current status and set of parameters; and responding to the request from the at least one second cellular network device if tethering can be provided, the response including a set of tether performance parameters for the provided tether.

In a further aspect, an embodiment of the invention provides a method of selecting an operating mode of a mobile device involved in communication with another device, the mobile device having a cellular network interface for communication via a cellular network and at least one local network interface for communication with said another device, the method comprising: monitoring the device status of the cellular network interface; selecting between one of a plurality of modes of operation based on the status of a cellular interface monitor; manual override switch, registered devices data store and a set of configuration parameters; configuring the mobile device to operate in accordance with the selected mode, wherein: in a first mode, the mobile device is configured to operate in a tether receiver mode; in a second mode, the mobile device is configured to operate as a tether provider.

### Figures

Embodiments of the present invention will now be described with the aid of the accompanying Figures in which:
Figure 1 schematically shows an overview of a cellular system whereby mobile devices subscribed to a first cellular network cannot connect to the first cellular network but are within range of a second mobile device subscribed to a second cellular network;
Figure 2 schematically shows the cellular system according to a first embodiment whereby a mobile device of the first cellular network has tethered to the second mobile device of the second cellular network;
Figure 3 schematically shows the functional components of the first mobile device and second mobile device used in the establishment of an automatic tether process according to the first embodiment;
Figure 4 schematically shows the functional components of an auto tether controller having functionality to act as both a tether requester and a tether provider;
Figure 5 is a flowchart showing the operation of a mode selector function within the auto tether controller illustrated in Figure 4;
Figure 6 is a flowchart showing the operation of the tether requestor function of the auto tether controller; and
Figure 7 is a flowchart showing the operation of the tether provider function of the auto tether controller.

### Description

### System overview

The operation to tether is generally a manual process in which the user of a mobile device, such as a mobile phone, laptop or tablet, that has lost service (tether client) must first realise that they have lost service and then ask another mobile phone subscriber to allow their mobile device to act as a tether provider and enable tethering on their mobile device and optionally provide authentication information to the tether client.

The tether client must then connect to the tether provider via a local data link that acts as the tether link before data sessions to external network resources can be established.

In general, a mobile device can function as both a tether client and a tether provider, the role being dependent on local configuration and also on the connectivity state. When a device has lost connectivity and therefore requires an alternative data connection it will be referred to as a tether client or tether requestor and when a device has connectivity and is able to offer connectivity it will be referred to as a tether provider.

In the present embodiment, the mobile devices involved in tethering are modified so that the tethering interaction can be carried out without user intervention. This enables a data connection to be made available in a more seamless manner and furthermore the created link is formed with knowledge of the type of data connection and likely usage cases during the tether session.

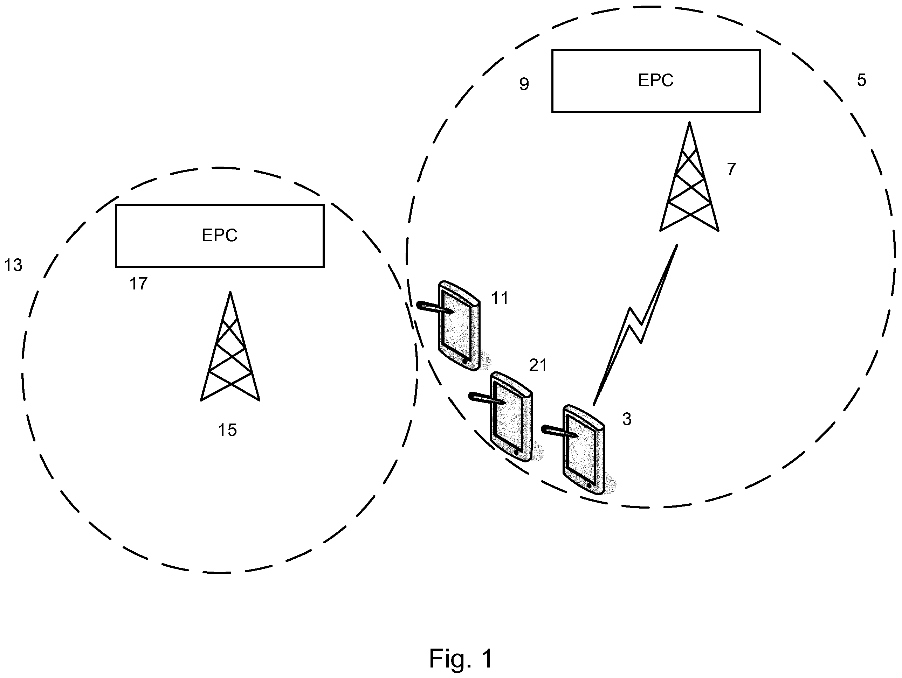

Figure 1 shows a system of mobile devices which can implement the tether behaviour of the first embodiment. A first mobile device 3 belonging to a first user is configured using a suitable Subscriber Identity Module (SIM) to subscribe to a first cellular network 5 which in this embodiment is a Long Term Evolution (LTE) network. The first mobile device is shown connected to a macrocell base station 7 known in LTE as an eNodeB, forming part of the first cellular network 5. For ease of explanation, only a single macrocell 7 is shown although cellular networks generally have many macrocells forming a radio access network (RAN) providing cellular connectivity over a large geographical area. The first cellular network 5 also contains an Evolved Network Core (EPC) 9 for processing all non-RAN aspects of the cellular network such as billing, routing calls and routing data packets to external data networks.

A second mobile device 11 is shown in a similar location to the first mobile device 3. The second mobile device 11 is configured using a SIM to subscribe to a second cellular network 13 also having a macrocell 15 forming part of a radio access network and also an EPC 17 for carrying out control functions.

The second mobile device 11 is shown in Figure 1 to be outside of the cellular range of the macrocell 15 and therefore unable to connect to the second cellular network 13. This can occur for a number of reasons. The second mobile device 11 may be too distant from the macrocell 15 (and the range of other macrocells, i.e. a coverage gap), local interference at the frequency of the cellular network, a temporary fault at the macrocell or overloading etc.

The second mobile device 11 will be without service until it moves to a new location which is within range of the macrocell 15 or service is restored.

A third mobile device 21 is also shown in Figure 1. The third mobile device 21 is subscribed to the second cellular network and since it is in a similar location as the second mobile device 11, it is also outside of the connectivity range of the macrocell 15 of the second cellular network 13.

Unlike the second mobile device 11, the third mobile device 21 is configured to detect the service loss and automatically establish a tethered link to the first mobile device 3 in accordance with the first embodiment.

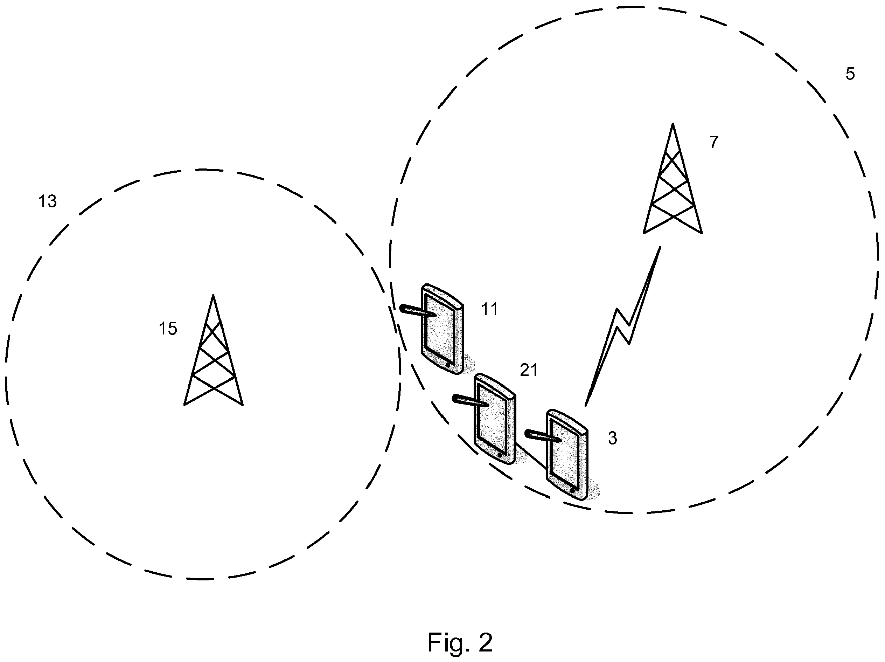

Figure 2 shows the same system of mobile devices 3, 11, 21 and cellular networks 5, 13 after the processing of the first embodiment at both the first mobile device and the third mobile device.

As shown, interaction between the first mobile device 3 and the third mobile device 21 allows the third mobile device to tether to the first mobile device and access data services via a local link and then the first mobile device's cellular link.

In Figures 1 and 2, tethering occurs between mobile devices subscribed to different cellular networks because of service loss for the tether client due to reception issues.

In other embodiments, tethering can take place between subscriber devices of the same network, for example where a pay-as-you-go customer has run out of credit and tethers from a contract scheme subscriber.

### Functional view of the mobile devices

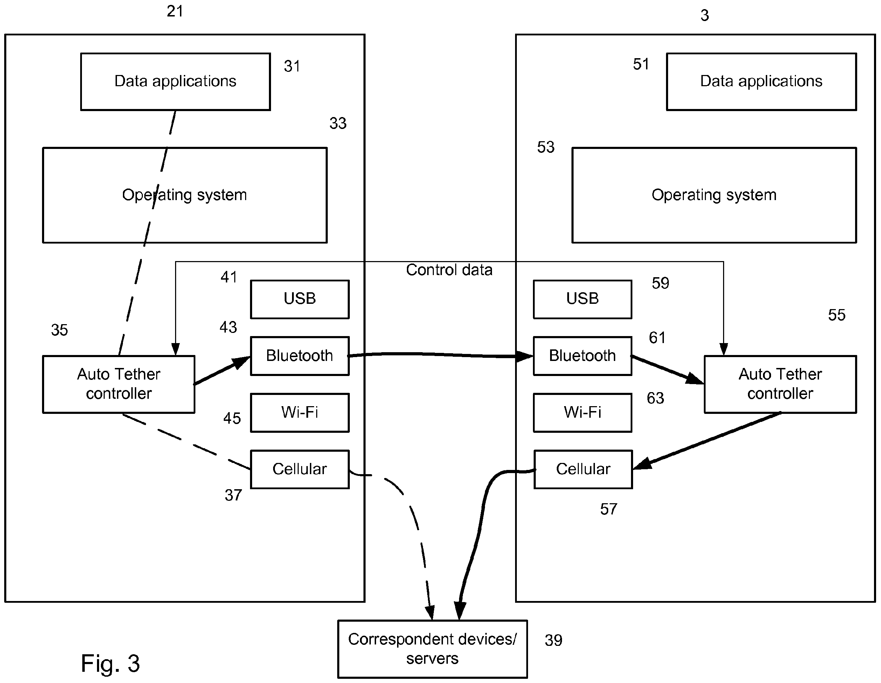

Figure 3 shows an example of the data path between the third mobile device 21 (a tether client) and the first mobile device 3 (a tether provider) when the tether link has been established as shown in Figure 2.

### Tether requestor

The functional components of the third mobile device 21 include a set of data applications 31, an operating system 33, an auto-tether controller 35, a cellular network interface 37 and a number of short range connectivity protocol interfaces. In this embodiment the third mobile device includes a USB interface 41, a Bluetooth interface 43 and a WiFi interface 45.

When the third mobile device is connected to its subscribed cellular network, data generated and processed by data applications 31 are able to communicate with services located at correspondent devices and servers 39. Application data packets are delivered via the operating system and converted in transport layer and network layer data packets. The Auto Tether controller 35 is not active because the cellular interface 37 is active and therefore packets are delivered to the cellular interface for transmission using a cellular network protocol such as Long Term Evolution (LTE). Once in the cellular network, the data packets are routed via the EPC and wide area networks to the correspondent device. However, in the first embodiment, when a service loss is detected, the auto tether controller can enter a requestor mode of operation and is operable to establish a tethered connection with a nearby tether provider over a local connection.

In this example, the first mobile device 3 is available as a tether provider. The first mobile device contains a set of data applications 51, an operating system 53, an auto-tether controller 55, a cellular network interface 57 and a number of short range connectivity protocol interfaces. In this embodiment the third mobile device includes a USB interface 59, a Bluetooth interface 61 and a WiFi interface 63.

At the first mobile device 3, the auto tether controller 55 is configured to operate in a provider mode to share the first mobile device's cellular interface 57 with the tether request from the third mobile device.

As will be explained later, the auto tether controller 55 in the provider mode will be able to set parameters for the tether provision such as the type of local interface to be used, the duration of tethering and speed of connection.

Figure 3 shows the alternative path negotiated between the auto-tether controller 35 of the third mobile device and the auto tether controller 55 of the first mobile device 3. The two controllers negotiated a tether connection over Bluetooth and therefore data packets from the applications 31 are internally directed by the auto tether controller 35 to the Bluetooth interface 43 of the third mobile device 21. The application data is transmitted wirelessly from the Bluetooth interface 43 to the Bluetooth interface 61 of the first mobile device.

At the first mobile device 3, the data packets received via Bluetooth are delivered internally to the tether controller 55 which forwards the data for transmission by the cellular interface 57. The auto tether controller also configures its routing tables so that any received packets addressed to the third mobile device are routed back to the third mobile device while packets for the first mobile device's data applications 51 are directed internally.

When the auto tether controller of the third mobile device 21 detects that it has regained connectivity to its subscribed cellular network, it will notify the auto tether controller of the tether provider and the original non-tethered data path is restored.

As mentioned above, the auto tether controllers 35, 55 in the third mobile device and first mobile device respectively can be configured to operate as both a tether requestor and a tether provider. The mode of operation is dependent on whether the mobile device has cellular connectivity to its subscriber cellular network.

Loss of connectivity may occur where a mobile device is either not in range of a base station of it subscribed cellular network, or connected but unable to communicate due to an account issue such as being out of credit.

A tether request would not be issued in case where the device is connected to a base station but chooses not to use the cellular connection. For example, the case where the device connects to WiFi instead.

### Auto tether controller

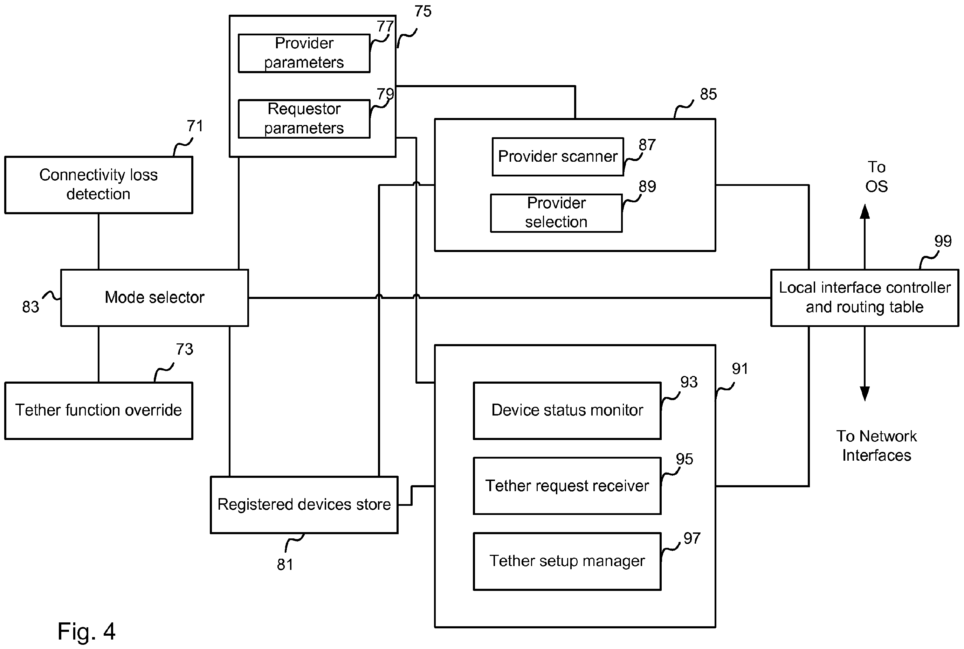

Figure 4 shows the components of an auto tether controller 35, 55 in the first embodiment.

A connectivity loss detector 71, a tether override function 73, a parameter data store 75 having provider parameters 77 and requestor parameters 79 and a registered devices store 81 provide data to a mode selector 83 which determines from the inputs whether to enable the auto tether function and which mode to use. The mode selector 83 also monitors the device status to reach a mode selection.

The mode selector 83 can either select to disable the tether feature, activate a tether requestor mode or a tether provider mode.

If the tether requestor mode is selected, a tether requestor function 85 is activated. The tether requestor function 85 contains a provider scanner 87 and a provider selector 89 for managing the tether request. The requester function 85 is operational when the mode selector 83 determines that the mobile device has lost its connection to the cellular network and therefore needs to find a tether provider to re-establish data links to network resources.

If the tether provider mode is selected, a tether provider function 91 is activated wherein the mobile device acts as a data transfer provider to other devices. The content provider function 91 of the auto tether controller 55 is operable when a device is connected to a valid cellular network connection and is available to offer tether requests to other devices.

The mode selector 83, tether requestor function 85 and the tether provider function 91 are linked to a local interface controller and routing table 99 for controlling the data paths during the tether operations. The local interface controller and routing table 75 connects the auto tether controller to the OS 33, 53, and network interfaces of the mobile device such as USB 41, 59, Bluetooth 43 61, WiFi 45, 63 and cellular 37, 57 interfaces of the mobile device.

### Auto tether controller configuration

Before the tether requestor 85 and content provider 91 functions of different mobile devices can communicate to automatically tether, the two devices acting as the respective requestor and provider must be firstly configured and then registered to one another by the users of the respective devices.

In this embodiment, a mobile app is provided to enable the user of each device to setup and store the behaviour of the auto tether controllers. In an alternative, the setup is included in the operating system settings.

### Provider

For the tether provider function 91, the user needs to define the conditions under which tethering will be allowed and the operating parameters of any established tether session. This is to ensure that the tethering to help another user, does not significantly deteriorate the tether provider's network session.

In this embodiment, the definable parameters include:
Permission Parameters/thresholds relating to whether tethering is allowed to be provided:
   - Time
      ∘ Times when tethering is automatically allowed
      ∘ Times when tethering is automatically rejected
      ∘ Times where the user of the tether provider device must manually accept or reject the session
   - Device status
      ∘ Battery life considerations, e.g. do not offer tethering if the battery level is below 20%
      ∘ Processing load, e.g. do not offer tethering if the processing load is above 80%
   - Cellular status
      ∘ Cellular reception strength, e.g. - do not offer tethering if the backhaul link is below 5Mbps
      ∘ Remaining data allowance, e.g. do not provide tethering is there is less than 500Mb allowance remaining.

Other parameters can be defined relating to the operation of the tether provider in offering and providing tethering.

Performance Parameters related to the tethering service when allowed:
- A data cap/limit value for how much data from the user's data subscription plan is allowed to be used for tethering
- Data rate cap on bandwidth offered
- Rules for a tether request when the user has fully used their data allowance
- Tether interface priority-default is USB, WiFi, Bluetooth
- Security credentials for tether interfaces, e.g. WiFi hotspot password

In this embodiment, the example values are provided as default values and the user can amend the parameters to suit their own requirements. The set of parameters are stored in the provider parameters store 77 of the parameter store 75.

For the operation of the tether requestor part 85, the user can alter default values stored in the requestor parameter store 79 which specify the behaviour of the mobile device in being a tether requestor, for example:
- Times when tethering can be requested
- How aggressively/quickly a tether link should be established
- A priority scale for provider cellular networks
- A favourites list of tether provider devices

### Device registration

In addition to defining the conditions under which a tether provider will allow tethering, the app also provides a procedure for devices to be associated with each other for auto tethering between tether providers and tether requestors.

Returning to the above example shown in Figure 2, the first mobile device and the third mobile device were previously registered with each other so that the automatic tether routine could be carried out. To associate the devices, both devices download the tethering app (or enter the settings page if built into the OS) and they are physically linked, for example by a cable, point to point wireless link or connected to the same WiFi network so that they are discoverable to each other. A scan is performed for neighbouring devices running the app. In this embodiment the link can be initiated by either the tether requestor or the tether provider.

In this example, the first mobile device 3 acting as the tether provider initiates the registration. The user of the first mobile device 3 sends a request via the app to the third mobile device 21 to establish a link between the devices. The user of the third mobile device 21 receives the notification via the app and they can select whether to accept or decline the tether link.

If the user declines, then the registration process ends.

If the user accepts the link, then the first mobile device and third mobile device swap tethering information to enable future auto tethering. This includes:
- which tether interfaces are available for the tether provider;
- network identifiers for each of the tether interfaces on both devices;
- WiFi hotspot network name and passwords for tethering over WiFi.

Since the role of requestor and provider will change according to the connectivity status of each device, the provider information for both devices in the tether provider mode are transferred. The registration information is stored in the registered devices store 81.

Once registered, the third and first device are able to use each other for tether provision when required. If the app is also installed on the second mobile device 11 and registration procedures are carried out between both the first device and the second device, the second device and the third device, then automatic tethering in accordance with the first embodiment can be performed between all three devices.

An example of the registration details stored in the registered devices store 81 of the first mobile device 3 is shown below:

### Mobile device 1

| Registered devices | Network Interface | Address/Identifier |
|---|---|---|
| Mobile device 3 | WiFi | Dev1 MAC1 |
| Mobile device 3 | Bluetooth | Dev1 MAC2 |

Once the devices have been registered, the automatic tethering between a tether requester and a tether provider is ready.

### Tether mode selection

The mode selector 83 is responsible for selecting the operating mode of the auto tether controller. The connectivity loss detector 71, tether function override 73, parameters in the parameter store 75 and the registered devices store 81 provide information to the mode selector 83.

### Connectivity loss detector 71

The connectivity loss detector 71 monitors the status of the cellular interface 37, 57 via the local interface controller 99. Its output to the mode selector 83 will be to recommend the tether requestor mode when there is no cellular connectivity and to recommend the tether provider mode when there is cellular connectivity to the mobile device's cellular network.

In general, when the mobile device is on, it will be connected to its cellular network and therefore the connectivity loss detector 71 output will be to recommend the provider mode.

Although the connectivity loss detector is primarily focused on the status of the cellular interface, to avoid false positives, the WiFi interface and user settings are also monitored so that decisions can be based on the overall context of the mobile device, for example, if the device has entered the offline "airplane mode" this represents an explicit state where the user does not wish connectivity, therefore the connectivity loss detector would recommend disabling any tethering mode in this situation.

When a user connects to a WiFi connection, the connection to the cellular network via the cellular interface is maintained for voice and Short Messaging Service (SMS) usage and the WiFi connection is used for data services. The connectivity loss detector 71 is aware of this behaviour and therefore will also recommend disabling the tethering modes.

In the genuine cases where the cellular is disconnected due to service loss from the cellular network, then the cellular loss detector 71 will send a recommendation to the mode selector 83 for entering the tether requestor mode.

### Tether function override 73

The tether function override 73 allows a user to manually control via the app whether to allow the operation of the tether function.

### Mode selector 83

The mode selector 83 receives input from the connectivity loss detector 71, tether function override 73, parameters store 75 and the registered devices store 81. The generated output will be either to disable the operation of the auto tether controller, activate the requestor mode or activate the provider mode.

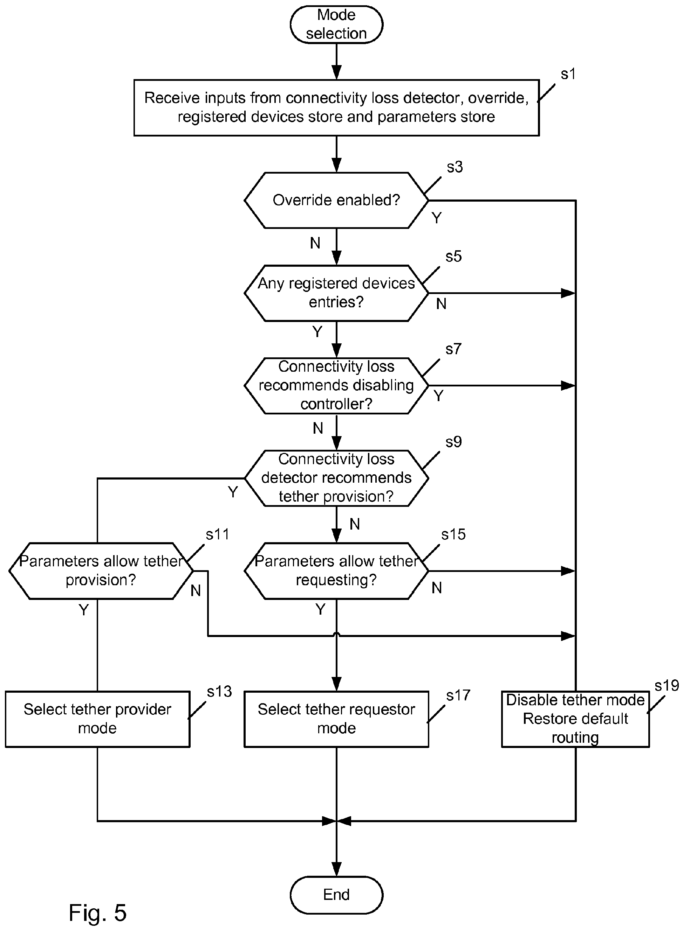

Figure 5 is a flowchart showing the operation of the mode selector 83 in the first embodiment.

In step s1, the mode selector 83 receives input from the connectivity loss detector 71, tether function override 73, parameters store 75 and the registered devices store 81. In step s3 the mode selector 83 checks the status of the tether function override 73. If the user has specified that tethering is not allowed, then the mode selector outputs that tethering, both providing and requesting, is disabled and processing moves to step s19 where the tether operations are disabled and the default operation of the mobile device routing is restored. After step s19 processing ends until the next periodic operation of the mode selector 83 which in this embodiment is every two minutes.

If tethering is enabled by the user, in step s5 the mode selector checks the registered devices store 81 for entries. If there are no entries, then processing moves to step s19, the mobile device is not configured to form a tether link so the output is that tethering is disabled.

If there are registered devices stored, then in step s7, the connectivity loss detector 71 output is checked, if the connectivity loss detector 71 recommends disabling the operation of the auto tether controller then processing moves to step s19 and processing ends. Otherwise, in step s9 a check is carried out to see whether the tether provider mode is recommended by the connectivity loss detector, if so, in step s11, the mode selector 83 considers whether the tether provider mode should be selected on the basis of the current status of the device in terms of time, device and cell parameters in the provider parameter store 77 and the device status.

If any one of the parameter thresholds are not satisfied then the tethering cannot be provided and the mode selector moves to step s19 where tether provision is disabled and processing ends. For example if the current time is outside the defined time period where tethering is allowed to be provided or if the remaining data allowance is too low. However, if the device status can support functioning as a tether provider, in step s13 the mode selector 83 selects the tether provider mode of operation and passes the device state values to the tether provider function 91 and processing ends for the mode selector 83.

Returning to steps s9, if the connectivity loss detector indicates that connection has been lost, then the mode selector determines in step s15 whether to select the tether requestor mode using the parameters in the requestor parameters store 79.

If the parameters are not met, then processing moves to step s19 and the mode selector 83 outputs that tethering is not allowed. However, if the parameters are met, then in step s17 the mode selector 83 selects the tether requestor mode and passes on parameters and device state to the tether requestor function 85 and processing ends.

In the above processing, when the mode selector 83 determines that tethering is not allowed, then it configures the local interface controller and routing table 99 to either remain in a conventional configuration or to remove any previous configuration by the tether requestor function 85 or the tether provider function 91.

### Tether requestor function 85

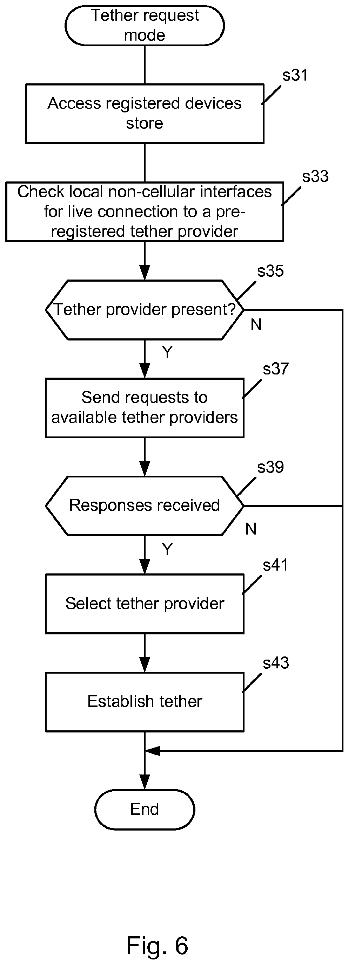

Details of the operation of the tether requestor mode will now be described. Figure 6 is a flowchart showing the operation of the Tether requestor function 85.

Once the tether requestor function 85 receives an instruction to establish a connection to a neighbouring tether provider, in s31 the provider scanner 87 accesses the registered devices store to retrieve registered provider device credentials and in steps s33 checks whether there are any nearby registered devices which can offer a tether connection.

For each of the available local interfaces, USB, WiFi and Bluetooth, the provider scanner 87 sequentially activates the local data link and tests for the presence of a registered tether provider and also listens for responses from any available tether providers.

For the USB and Bluetooth interfaces, the provider scanner activates the respective interface, checks a COM port number associated with the tether service (stored in the registered devices store 87 information) and sends a request to that port.

For the wireless links, the WiFi network name and credentials details in the registered devices store are retrieved. The provider scanner 87 uses the WiFi interface to look for a network having the registered SSID.

After a short time, in step s35, the tether requestor function checks whether any registered providers are present, if none are available then processing ends.

If at least one provider device is deemed to be present on a local interface, then in step s37 a request is sent to the available providers for tethering. In the request, the provider scanner 87 also includes an indication of the expected data link demands of the requestor. The tether requestor function monitors the current load on the mobile device and the types of applications and services which are active. Different types of application have different levels of bandwidth consumption and this is determined and included in the request. For example, if the device was inactive at the time of connectivity loss, then the request will indicate low expected usage. If there was an active web browsing, then request would indicate medium expected usage and if the user was in a video call or streaming media, then high activity would be indicated. This provides information to any provider of the likely demands if they were to offer tethering.

### Tether selection

The provider selection function 89 waits for a short period of time and in step s39 checks for any responses received from potential tether providers. Once the delay period has expired, if no responses are received then processing ends. If at least one response has been received, in step 41 the provider selection function processes any received tether offers to select a provider for use in accordance with the tether requestor parameters 79.

In this embodiment, the tether requestor function is configured on the basis that having some connectivity is better than no connectivity, therefore if only one response is received, the offer will be accepted regardless of the expected link demands.

However, where multiple responses are received. The tether selection function must select one of the tether providers which responded.

Using the default configuration, since a tether connection can be provided via any local interface, the tether provider function 89 checks for tether provider devices at the USB interface, Bluetooth and WiFi interfaces. USB is checked first because a wired connection is general more reliable than wireless devices.

If a wired connection is not available, the wireless local interfaces are checked, i.e. the WiFi and Bluetooth interfaces.

If a tether provider is only available via the WiFi interface, then the WiFi interface is used to establish a tether. If a tether provider is only available via the Bluetooth interface, then the Bluetooth tether is selected.

If tether clients are available at both the WiFi and Bluetooth interfaces, WiFi will only be selected if the mobile device is charging from a power source or if it is not charging but has sufficient battery power, for example 60%. Otherwise Bluetooth is selected. This is because WiFi can provide a faster data speeds although it can use more power than Bluetooth.

In the first embodiment, the selection can also operate on the basis of an indicated "quality of offer" from a tether provider device. As will be described below, the tether provider responses also include a set of tether performance parameters defining any restrictions/conditions which would be imposed on the tether session such as bandwidth limits, time limits, access restrictions (website content blocking due to age or geographic restrictions). For example, one provider may offer a USB connection restricted to a low bandwidth, while a Bluetooth tether may allow a high bandwidth. In this case, the standard behaviour is different in that the tether connection is based on the maximum actual bandwidth in addition to the interface type.

Once the provider selection function 89 has chosen a tether provider, in step s43 a tether connection is initiated via the chosen local interface. A rule is updated in the local interface controller 99 so that data packets received from data applications are forwarded to the selected tether interface instead of the cellular interface. For incoming data, a rule is updated so that data packets received from the chosen tether interface can be forwarded to the data applications.

### Tether Provider function 91

The tether provider function 91 is activated if the tether provider mode is selected by the mode selector 83. The tether provider function 91 includes a device status monitor 93, a tether request receiver 95 and a tether setup manager 97.

The device status monitor 93 is also concerned with the mobile device's ability to provide a tether connection. In particular, it periodically checks the device load and other performance variables which are not related to the cellular interface against the values in the provider parameters. For example it also monitors the performance of the local interfaces such as the WLAN interface and Bluetooth interface.

Example data collected by the device status monitor 93:

| Parameter | Value |
|---|---|
| Data plan remaining | 2GB of 2GB |
| Data cost on tariff | £1/GB |
| Tether apps allowed | All |
| Battery status | 80% |
| Network type | LTE |
| Connectivity rate | 36.4Mbps |
| Battery saving cell search block enabled | Yes |
| Device CPU load | 4% |
| Current time | 12:06 |

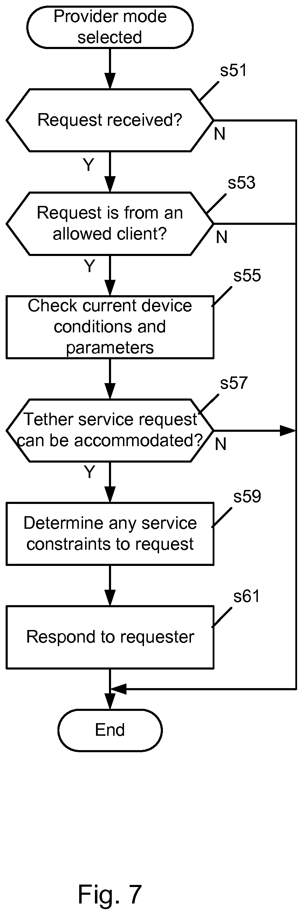

Figure 7 is a flowchart showing the processing of the tether provider function 91. In step s51, the tether request receiver 97 listens for requests from registered requestor devices received on any of the active local network interfaces, i.e. USB, WiFi and Bluetooth. If no requests are received then processing ends for the tether cycle. If in step s53, a tether request is received from the tether requestor function 85 of another mobile device, the tether request receiver 95 extracts the information in the request and compares it against the registered devices store to determine whether the device is an allowed client/requestor. If the requesting device is not allowed, processing ends without the provider function attempting to offer a tether connection.

If the requestor device is allowed, in step s55, the device status information 93 and the data of the request is passed to the tether setup manager 97 to check the current device conditions and active parameters affecting the ability to offer tethering.

In step s57 a test is performed to determine whether the tether request can be accommodated. In a basic setup a tether offer is provided to any incoming request. However, restrictions can also be applied in accordance with the performance parameters stored in the provider parameters store 77 which may have been altered by the user from the default values, such as the identity of the requester or the cellular network used by the tether requester. As mentioned above, the request from the tether requester includes an expected level of demand. Therefore in addition to considering the current status of the mobile device, the tether provider will also consider the effect of providing service to the tether requestor on the performance/load on the mobile device.

If the tether request cannot be accommodated, then processing ends without responding to the tether request.

However, if the tether setup manager 97 determines that a tether request can be satisfied, in step s59 any service constraints of the tether service such as data rate limits, data quantity caps, time caps, content blocking, etc., are determined. Finally, in step s61 a response is sent to the tether requestor and processing ends.

Since the tether requestor has the option of choosing any of the received tether offers, the tether offer by a particular device may not be chosen. However if the tether provider function receives a message indicating acceptance of the tether offer, the tether setup manager updates the local interface controller and routing table 99 with a set of rules so that:
- Packets received from the chosen local network interface used in the tether are forwarded to the cellular interface;
- Packets received from the cellular interface which are addressed to the tether requester mobile device are routed to the local interface used for the tether link.

The process by which tethering takes place is well documented and therefore will not be described in more detail.

The effect of the processing of the first embodiment is that a device which is configured as a tether client is able to monitor for service loss from its own cellular network and attempt to tether to a nearby tether provider in order to maintain connectivity to external network resources. Being an automated process, the alternate connectivity can be established to minimise service loss caused by delays in the user noticing that service loss has occurred.

### Requestor operation

Once a tether session between a tether requestor and a tether provider has been established, the data packets for applications on the tether requestor travel via the tether provider to external network resources.

As described above, the connectivity loss detector 71 is configured to periodically monitor the connectivity status of the mobile device as an input to the mode selection for enabling the tether provider and tether requestor modes. The connectivity loss detector 71 is also configured to continually monitor the network connectivity status once a tether session has been established to another device.

If a tether requestor is tethering to a tether provider and connectivity to its own cellular network is available, then it should switch back to using its own cellular connection. In this embodiment, the mode selector is configured so that it must log three notifications from the connectivity loss detector that connectivity has been restored (representing a sustained period of restored connectivity) before disabling the tether mode. This is to prevent a situation where the tether is disabled due to a temporary restoration of cellular access but then must be immediately re-established.

### Tether provider operation

While a mobile device is configured as a tether provider, the connectivity loss detector 71 continues to check for connectivity loss from the cellular network and if it determines that the mobile device has lost connectivity to its cellular network, the mode selector will disable the tethering provider function after three notifications that connectivity has been lost.

Even if connectivity has not been lost, the device status monitor 93 also continues to monitor the status of its own cellular load and remaining data allowance. The tether setup manager 97 compares the current device status with the operational parameters in the provider parameters store 77 to determine whether tethering can continue to be provided. In the event that the cellular load is above the threshold or the remaining data allowance allocated to the tether session is used up, the tether setup manager 97 will notify the tether requestor, disable the tether connection and restore the standard configuration of the local interface controller and routing table.

After breaking the tether connection, when the tether requestor requests a tether connection, the mode selector 83 will determine that tethering cannot be provided and therefore tethering will not be provided until the processing load decreases or remaining data allowance for tethering is increased.

### Alternatives and modifications

In the embodiment, the mobile devices can operate as both tether providers and tether receivers. There will be cases where a device is only required to act as a tether requestor or as a tether provider. For example, a user may want to only tether from other devices but never act as a tether provider. A parent may also configure a child's device to only have a limited amount of data allowance and then tether to the parent's device. Furthermore, they may configure a spare device to act solely as a tether provider in a manner similar to devices marketed as "pocket WiFi".

Therefore in an alternative, the mode selector can be modified so that it only needs to decide between being disabled and the tether requestor mode, or the disabled and tether provider mode.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method of operating a first cellular network device to access external network resources via at least one second cellular network device configured as a data transfer provider, the first cellular network device having a cellular network interface for communication with a cellular network and at least one local network interface, the at least one second cellular network device having a cellular network interface and at least one local network interface matching the at least one local network interface of the first mobile device, the method being performed by said first cellular network device and comprising:
determining an occurrence of service loss between the first cellular network device and the cellular network via the cellular network interface;
detecting the presence of the at least one second network device via the at least one local network interface;
sending a request to the at least one second cellular network device to route data via the at least one local network interface and cellular network interface of the at least one second cellular network device;
receiving a response to the request from the at least one second cellular network device; and
connecting to said at least one second cellular network device via the at least one local network interface.

2. A method according to claim 1, further comprising the steps of determining an expected level of demand for bandwidth by the first cellular network device; including the generated demand level in the request; and connecting to the at least one second cellular network device if the response includes an indication that the demand level can be satisfied.

3. A method according to claim 1 or 2, further comprising detecting a third cellular network device via the at least one local network interface; comparing the respective responses from the second cellular network device and third cellular network device; and selecting one of the second cellular network device and third cellular network device in dependence thereon.

4. A method according to claim 3, wherein the at least one local network interface includes a wired cable connection and a wireless network interface; and in the selecting step, wired cable connections are selected in preference to wireless connections.

5. A method according to claim 3 or 4, wherein the responses from the second cellular network device and the third cellular network device include a set of performance metrics and the selecting step includes a comparison of the sets of metrics and a data transfer provider is based on the comparison.

6. A method according to the claim 5, wherein a connection is made to the selected data transfer provider in accordance with any constraints in the performance metrics.

7. A method according to any preceding claim, further comprising detecting the reestablishment of cellular service between the first cellular network device and the cellular network and cancelling the connection to the data transfer provider.

8. A computer program product comprising processor implementable instructions which, when executed by a programmable processor carry out the method according to any of claims 1 to 7.

9. A method of operating a first cellular network device to provide access to external network resources for at least one second cellular network device configured as a tether requestor, the first cellular network device having a cellular network interface for communication with a cellular network and at least one local network interface, the at least one second cellular network device having a cellular network interface and at least one local network interface matching the at least one local network interface of the first mobile device, the method being performed by said first cellular network device and comprising:
receiving a request for tethering from the at least one second device;
determining the current status of the first cellular network device;
accessing a set of parameters relating to conditions for providing tethering;
determining whether tethering can be provided to the tether requestor in dependence upon the current status and set of parameters; and
responding to the request from the at least one second cellular network device if tethering can be provided, the response including a set of tether performance parameters for the provided tether.

10. A method according to claim 9, wherein the set of parameters include time, device status and cellular network performance thresholds used to define when a tether request can be provided.

11. A method according to claim 9 or 10, wherein the set of performance parameters provided to the at least one second cellular network device include at least one of bandwidth limits, time limits and access restrictions.

12. A method according to any of claims 9 to 11 further comprising: providing a tether session to the tether requestor, monitoring the tether session against the sent set of performance parameters and disabling tethering when at least one of the performance parameters is exceeded.

13. A computer program product comprising processor implementable instructions which, when executed by a programmable processor carry out the method according to any of claims 9 to 12.

14. A method of selecting an operating mode of a mobile device involved in communication with another device, the mobile device having a cellular network interface for communication via a cellular network and at least one local network interface for communication with said another device, the method comprising:
monitoring the device status of the cellular network interface;
selecting between one of a plurality of modes of operation based on the status of a cellular interface monitor; manual override switch, registered devices data store and a set of configuration parameters;
configuring the mobile device to operate in accordance with the selected mode, wherein:
in a first mode, the mobile device is configured to operate in a tether receiver mode;
in a second mode, the mobile device is configured to operate as a tether provider.

15. A computer program product comprising processor implementable instructions which, when executed by a programmable processor carry out the method according to claim 14.
